# FASCICULE DE BREVET EUROPEEN

(11) **EP 3 119 370 B1**
(45) Date de publication et mention de la délivrance du brevet: **29.11.2017**
(21) Numéro de dépôt: 15711263.2
(22) Date de dépôt: 27.02.2015
(51) Int. Cl.: A61H 9/00, B60N 2/66, B60N 2/44

(54) **PROCÉDÉ DE CONTRÔLE DE LA FONCTION MASSAGE D'UN SIÈGE DE VÉHICULE AUTOMOBILE ET SYSTÈME ADAPTÉ A LA MISE EN OEUVRE D'UN TEL PROCÉDÉ**
VERFAHREN ZUR STEUERUNG DER MASSAGEFUNKTION EINES KRAFTFAHRZEUGSITZES UND ZUR IMPLEMENTIERUNG SOLCH EINES VERFAHRENS GEEIGNETES SYSTEM
METHOD FOR CONTROLLING THE MASSAGE FUNCTION OF A MOTOR VEHICLE SEAT AND SYSTEM SUITED TO IMPLEMENTATION OF SUCH A METHOD

(30) Priorité: 21.03.2014 FR 1452402
(43) Date de publication de la demande: 25.01.2017
(73) Titulaire: PSA Automobiles SA, 78300 Poissy (FR)
(72) Inventeur: HANSEN, Gael, F-78390 Bois D Arcy (FR); MORELLEC, Olivier, F-91190 St Aubin (FR)
(74) Mandataire: Jeannin, Laurent Jean-Pierre
(86) Numéro de dépôt international: PCT/FR2015/050487
(87) Numéro de publication internationale: WO 2015/140435

(56) Documents cités:
- WO-A1-97/48314
- WO-A1-98/05288
- FR-A1- 2 938 354
- US-A1- 2002 027 384
- US-A1- 2003 038 517
- US-A1- 2006 192 362
- US-A1- 2011 055 720

## Description

### Domaine de l'invention

La présente invention concerne d'une manière générale les sièges de véhicules automobiles intégrant une fonction massage. L'invention vise plus particulièrement un procédé de contrôle de cette fonction massage selon la revendication indépendante 1 ainsi qu'un système adapté à la mise en oeuvre d'un tel procédé (voir par exemple FR 2938354 A, correspondant au préambule de la revendication indépendante de produit 8).

### Arrière-plan de l'invention

Les sièges conducteurs des véhicules automobiles haut de gamme intègrent généralement une fonction massage au niveau du siège permettant d'assurer la relaxation de conducteur, en particulier sur les longs trajets.

Le contrôle de cette fonction massage s'effectue habituellement via l'interface tactile du système de commande centralisé du véhicule situé en partie centrale du tableau de bord.

Le nombre de fonctions contrôlées par un tel système de commande centralisé étant désormais particulièrement élevé, les passagers avant du véhicule peuvent éprouver certaines difficultés à accéder rapidement au menu correspondant à cette fonction massage.

Cela est tout particulièrement le cas pour le conducteur qui doit manipuler l'interface tactile de ce système de commande centralisé tout en conduisant. En outre, le fait que son regard soit alors détourné vers cette interface tactile entraine une hypovigilance temporaire de ce conducteur source d'accident.

La demande de brevet américaine US 2014/0025258 A1 propose un procédé de contrôle de cette fonction massage du siège ne nécessitant pas de manipulation systématique de l'interface tactile pour assurer le lancement de la fonction massage du siège.

Selon ce procédé, ce conducteur commence par activer le mode de sélection d'un programme de massage en pressant un premier bouton situé sur le côté du siège.

Ce mode de sélection va alors lancer un aperçu rapide et cyclique des différents programmes de massage que propose le siège, chacun d'entre eux correspondant à une zone spécifique de massage du corps.

Si l'utilisateur juge au vu de l'aperçu du premier programme de massage que ce dernier ne lui convient pas, celui-ci attend jusqu'au lancement de l'aperçu du programme suivant, et ainsi de suite.

Lorsque cet utilisateur identifie un aperçu de programme qui le satisfait, celui-ci confirme sa sélection en pressant un bouton de validation situé par exemple sur le volant, ce qui a pour conséquence de lancer le programme correspondant dans son intégralité.

Un tel procédé de contrôle de la fonction massage du siège permet ainsi à l'utilisateur et en particulier au conducteur du véhicule, de lancer l'un des programmes de massage disponibles sans avoir à manipuler l'écran tactile du système de commande centralisé.

La manipulation de cet écran n'est requise que si cet utilisateur souhaite modifier les paramètres de massage de ce programme : ce dernier devant alors appuyer sur un bouton spécifique pendant l'aperçu du programme en question de sorte à entrainer l'affichage à l'écran du menu de paramétrage tactile.

Ce procédé de contrôle de la fonction massage du siège a cependant pour principal inconvénient de nécessiter pour sa mise en oeuvre et en complément de l'écran tactile du système de commande centralisé du véhicule, l'implantation de trois boutons physiques spécifiquement dédiés : un premier pour activer le mode de sélection, un deuxième pour sélectionner le programme choisi et un troisième pour entrainer l'affichage sur l'écran du menu de paramétrage tactile.

Le contrôle de la fonction massage du siège n'est donc particulièrement intuitif pour l'utilisateur, au moins dans un premier temps lorsque ce dernier ne connaît pas encore la fonction précise associée à chacun de ces boutons.

En outre, l'implantation de ces boutons au niveau du siège et/ou du volant entraine un surcoût non négligeable du système de massage du siège permettant de mettre en oeuvre ce procédé.

### Objet et résumé de l'invention

La présente invention vise donc à proposer un procédé de contrôle de la fonction massage du siège qui soit particulièrement simple et intuitif pour l'utilisateur tout en présentant un coût de mise en oeuvre raisonnable.

Elle propose à cet effet, un procédé de contrôle d'un système de massage d'un siège de véhicule automobile intégrant une fonction massage et comportant un unique bouton de commande physique, ledit procédé étant caractérisé en ce qu'il comporte les étapes suivantes :
- affichage sur une interface tactile d'affichage et de commande dudit véhicule d'un menu de paramétrage de ladite fonction massage dans lequel les derniers paramètres à avoir été choisis par l'utilisateur sont présélectionnés par défaut, cet affichage du menu de paramétrage étant actionné par l'appui de l'utilisateur sur un bouton physique de commande ;
- lancement de la fonction massage avec les paramètres présélectionnés par défaut ou venant d'être sélectionnés par l'intermédiaire dudit menu de paramétrage, ce lancement de ladite fonction massage étant actionné par l'appui de l'utilisateur sur ledit bouton physique de commande lorsque ledit menu de paramétrage est affiché.

Le procédé selon l'invention permet à l'utilisateur d'activer le démarrage de la fonction massage du siège avec les derniers paramètres choisis présélectionnés par défaut, en ayant simplement à appuyer deux fois à la suite sur un même bouton physique de commande.

Ce procédé permet ainsi à l'utilisateur et en particulier au conducteur du véhicule, de lancer cette fonction massage de manière particulièrement intuitive et sans avoir à manipuler l'interface tactile d'affichage et de commande.

Cette manipulation de l'interface tactile n'est ainsi requise que si cet utilisateur souhaite modifier les paramètres de la fonction massage du siège. En pratique, dès lors que ce dernier a sélectionné des paramètres qui lui conviennent, il est rare qu'il souhaite en changer de sorte qu'il n'utilise de manière quasi-systématique que le seul bouton de commande physique pour lancer la fonction de massage.

En outre, et contrairement au procédé décrit dans ladite demande de brevet américaine US 2014/0025258A1, la mise en oeuvre du procédé selon l'invention n'entraine qu'un faible surcoût pour le système de massage : cette mise en oeuvre ne nécessitant en effet que l'adjonction d'un unique bouton physique dédié couplé à l'unité de contrôle de ce système.

Selon des caractéristiques préférées du procédé, prises seules ou en combinaison :
- ledit menu de paramétrage permet à l'utilisateur de choisir parmi plusieurs types de programmes prédéfinis et correspondant chacun à une ou plusieurs zones de massage particulières ;
- ledit menu de paramétrage permet à l'utilisateur d'ajuster également certains paramètres complémentaires tels que l'intensité ou la durée de ladite fonction massage ;
- ledit menu de paramétrage se ferme automatiquement au bout d'un certain délai prédéterminé pendant lequel ni ladite interface tactile ni ledit bouton physique n'ont respectivement été touché ou pressé par l'utilisateur ;
- ledit délai prédéterminé est de préférence compris entre 5 et 15 secondes ;
- l'arrêt de ladite fonction massage en cours d'exécution est actionné par l'appui de l'utilisateur sur ledit bouton physique de commande lorsque ledit menu de paramétrage est affiché ; et/ou
- le lancement ou l'arrêt de ladite fonction massage peut également être actionné par l'appui de l'utilisateur sur un bouton tactile présent dans ledit menu de paramétrage.

La présente invention a également pour objet un système de massage d'un siège de véhicule automobile adapté à la mise en oeuvre d'un tel procédé, ledit système comportant une pluralité de poches gonflables disposées dans ledit siège, un module de régulation de la pression dans lesdites poches, une interface tactile d'affichage et de commande, et une unité de pilotage dudit module de régulation couplée à ladite interface tactile ;
caractérisé en ce qu'il comporte en outre un unique bouton de commande physique couplé également à ladite unité de pilotage et destiné au lancement de la fonction massage lorsque le menu de paramétrage est affiché. Selon des caractéristiques préférées du système, prises seules ou en combinaison :
- ledit bouton physique de commande est situé sur un bord latéral de l'assise dudit siège ; et/ou
- ledit bouton physique de commande présente un témoin lumineux allumé lorsque la fonction massage est en cours d'exécution.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :
- la figure 1 représente un dossier de siège de véhicule automobile intégrant une fonction massage pour le passager ;
- la figure 2 représente un schéma fonctionnel d'un système de massage d'un siège selon l'invention ;
- la figure 3 représente un organigramme d'un procédé de commande de la fonction massage de siège, mis en oeuvre à l'aide du système de la figure 2.

### Description détaillée d'un mode de réalisation

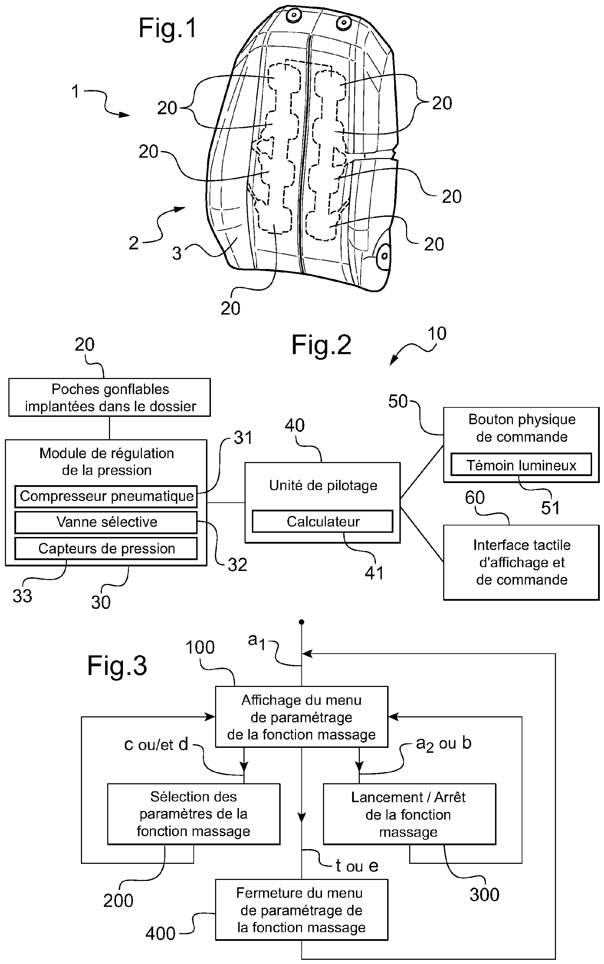

Le dossier de siège 1 représenté sur la figure 1 comporte classiquement une armature (non visible) typiquement réalisée dans un matériau métallique ou thermoplastique, et un garnissage 2 destiné à recevoir le dos d'un passager lorsque ce dernier s'assoit sur le siège.

Le garnissage 2 enveloppant l'armature comprend une matelassure en mousse 3 dont la face externe est recouverte d'une coiffe en tissu ou en cuir, non représentée pour une meilleure compréhension de l'invention.

Le système de massage 10 dont le schéma fonctionnel est représenté sur la figure 2, comporte une pluralité de poches gonflables 20 disposées dans le dossier 1, un module 30 de régulation de la pression dans les poches 20, une unité de pilotage 40, un bouton physique de commande 50 et une interface tactile d'affichage et de commande 60 (voir figure 1).

Comme illustré sur la figure 1, le dossier 1 comprend ici huit poches gonflables 20 sensiblement identiques et présentant une forme rectangulaire.

Dissimulées sous la coiffe du dossier qui les recouvre, ces dernières sont implantées sur la matelassure en mousse 3 au sein de la partie centrale d'appui du dossier 1.

Plus précisément, les poches gonflables 20 sont agencées en deux séries de quatre, situées de part et d'autre du plan médian du dossier 1 : les quatre poches gonflables 20 de chaque série étant réparties parallèlement les unes aux autres le long de la partie centrale d'appui du dossier 1.

Le module de régulation de la pression 30 est de préférence logé dans le dossier 1 du siège. Il comporte un compresseur pneumatique 31 relié à une vanne sélective 32 commandée électriquement et apte à réguler la pression régnant dans chacune des poches gonflables 20.

Le module 30 comporte également plusieurs capteurs de pression 33 destinés à assurer le suivi permanent de la pression dans l'ensemble des poches 20. Chaque capteur 33 est monté en connexion pneumatique avec une poche respective au niveau de la liaison avec la vanne sélective 32.

L'unité de pilotage 40, constituée de préférence par le boîtier de servitude intelligent (BSI) du véhicule, est munie d'un calculateur 41.

Elle est reliée électriquement à la vanne sélective 32 du module de régulation de la pression 30 dont elle pilote le fonctionnement en fonction des signaux de commande reçus en provenance du bouton 50 et de l'interface tactile 60.

Le bouton de commande 50 de type impulsionnel monostable, est relié électriquement à l'unité de pilotage 40. Il est situé de préférence sur un bord latéral de l'assise du siège, de manière à être facilement accessible pour le passager.

Ce bouton 50 présente en outre un témoin lumineux 51 allumé lorsque la fonction massage du siège est en cours d'exécution.

L'interface tactile 60 est constituée par l'écran tactile du système de commande centralisé du véhicule situé en partie centrale du tableau de bord.

Couplé électriquement à l'unité de pilotage 40, l'écran 60 permet d'afficher le menu de paramétrage tactile de la fonction massage du dossier 1 par l'intermédiaire duquel le passager a la possibilité sélectionner le type de massage et son intensité.

Selon une variante du système de massage, une fine couche de mousse peut être interposée entre l'ensemble des poches gonflables et la coiffe afin d'obtenir un ressenti passager comparable à celui des offert par les dossiers dépourvus de telles poches.

Selon d'autres variantes de réalisation de ce système, le nombre, la forme, les dimensions et l'agencement des poches gonflables sont différents. En particulier, le dossier peut comporter des poches de taille réduite mais en nombre plus important de sorte à améliorer la précision de chaque programme de massage.

Selon encore d'autre variantes de réalisation, la vanne sélective peut être remplacée par une série d'électrovannes raccordées chacune à une poche gonflable spécifique, et/ou le bouton impulsionnel n'est pas situé sur le siège mais à proximité de ce dernier (par exemple au niveau de la console centrale ou du côté interne de la portière).

On va maintenant décrire à l'appui de la figure 3 le procédé de commande de la fonction massage du dossier de siège 1, mis en oeuvre au sein du système de massage 10.

L'utilisateur souhaitant activer la fonction massage du dossier de siège 1 doit en premier lieu appuyer sur le bouton de commande impulsionnel 50 (action a₁), ce qui entraine l'affichage sur l'écran tactile 60 du menu de paramétrage de cette fonction (étape 100).

Via ce menu tactile, l'utilisateur a la possibilité de sélectionner les paramètres de la fonction massage (étape 200). Il peut tout d'abord choisir le type de programme de massage qu'il souhaite parmi une liste de huit types de programmes prédéfinis correspondant chacun à une ou plusieurs zones de massage particulières du dos (zone dorsale, zone lombaire, épaules, massage alternatif des zones dorsale et lombaire, etc...), en déplaçant l'un de ses doigts à l'intérieur d'une liste déroulante (action c).

Le passager a également la possibilité, au travers de ce menu, d'ajuster certains paramètres complémentaires tels que l'intensité ou la durée de la fonction massage, en déplaçant l'un de ses doigts le long de curseurs tactiles (action d) proposant d'opter parmi différentes valeurs de réglage prédéfinies.

Lorsque le menu de paramétrage apparaît à l'écran, les derniers paramètres de massage à avoir été choisis par l'utilisateur sont présélectionnés par défaut.

Le lancement de la fonction massage (étape 300) avec les paramètres présélectionnés par défaut ou venant d'être sélectionnés par l'intermédiaire du menu de paramétrage, peut s'effectuer de deux manières différentes.

La première possibilité consiste pour le passager à appuyer sur un bouton tactile marche/arrêt (action b) présent dans le menu de paramétrage tactile affiché sur l'écran 60, tandis que la seconde possibilité consiste à appuyer une nouvelle fois sur le bouton de commande impulsionnel 50 pendant que ce menu de paramétrage est affiché (action a₂).

Cette seconde option est particulièrement pratique lorsque l'utilisateur souhaite lancer la fonction massage avec les paramètres de massage présélectionnés par défaut.

Dans ce cas de figure particulier, la manipulation de l'écran tactile 60 n'est pas nécessaire et il lui suffit en effet simplement d'appuyer deux fois à la suite sur le bouton de commande impulsionnel 50 pour arriver à ses fins.

Pour éviter que le menu de paramétrage tactile remplaçant ou supplantant partiellement le menu principal du système de commande centralisé du véhicule (ou un autre module fonctionnel en cours d'utilisation tel que le système de navigation) ne demeure affiché trop longtemps sur l'écran 60, celui-ci se ferme automatiquement (étape 400) au bout d'un certain délai prédéterminé (de préférence compris entre 5 et 15 secondes et par exemple égal à 10 secondes) pendant lequel ni cet écran tactile 60 ni le bouton impulsionnel 50 n'ont respectivement été touché ou pressé par l'un des doigts de l'utilisateur (délai t).

Le menu de paramétrage tactile peut également être fermé de manière volontaire par l'utilisateur par un simple appui sur un bouton tactile dédié positionné par exemple dans le coin supérieur de ce menu (action e).

Lorsque le passager souhaite arrêter avant son terme la fonction massage en cours d'exécution, ce dernier doit en premier lieu (si ce menu n'est plus affiché sur l'écran suite à sa fermeture de manière automatique ou volontaire) appuyer une nouvelle fois sur le bouton de commande impulsionnel 50 (action a₁), afin que le menu de paramétrage tactile de la fonction massage s'affiche à nouveau sur l'écran 60.

La transmission à l'unité de pilotage 40 de l'ordre d'arrêter la fonction massage en cours peut s'effectuer de deux manières différentes pendant que ce menu de paramétrage est affiché.

La première possibilité consiste pour le passager à appuyer sur le bouton tactile marche/arrêt présent dans le menu de paramétrage tactile (action b), tandis que la seconde possibilité consiste à appuyer une nouvelle fois sur le bouton de commande impulsionnel 50 pendant que ce menu de paramétrage est affiché (action a₂).

Cette seconde option est particulièrement pratique car elle permet de stopper l'exécution de la fonction massage en cours (étape 300) de manière particulièrement aisée et sans avoir à manipuler l'écran tactile 60.

Selon des variantes de réalisation de ce procédé de contrôle d'un système de massage de siège selon l'invention, les types de programmes de massage et les paramètres complémentaires proposés sont différents et/ou d'un nombre plus ou moins important.

Selon d'autres variantes de réalisation de ce procédé, le réglage des paramètres complémentaires s'effectue de manière continue et non pas parmi des valeurs de réglage prédéfinies.

Selon encore d'autres variantes de réalisation de ce procédé, les paramètres de la fonction massage peuvent être modifiés pendant son exécution.

## Revendications

1. Procédé de contrôle d'un système de massage d'un siège de véhicule automobile intégrant une fonction massage et comportant un unique bouton de commande physique (50), ledit procédé étant **caractérisé en ce qu'**il comporte les étapes suivantes :
- affichage sur une interface tactile (60) d'affichage et de commande dudit véhicule d'un menu de paramétrage (300) de ladite fonction massage dans lequel les derniers paramètres à avoir été choisis par l'utilisateur sont présélectionnés par défaut (100), cet affichage du menu de paramétrage étant actionné par l'appui de l'utilisateur sur ledit bouton physique de commande (50) (a₁) ;
- lancement de la fonction massage avec les paramètres présélectionnés par défaut ou venant d'être sélectionnés par l'intermédiaire dudit menu de paramétrage (300), ce lancement de ladite fonction massage étant actionné par l'appui de l'utilisateur sur ledit bouton physique de commande (50) lorsque ledit menu de paramétrage est affiché (a₂).

2. Procédé de contrôle selon la revendication 1, **caractérisé en ce que** ledit menu de paramétrage permet à l'utilisateur de choisir parmi plusieurs types de programmes prédéfinis et correspondant chacun à une ou plusieurs zones de massage particulières.

3. Procédé de contrôle selon la revendication 2, **caractérisé en ce que** ledit menu de paramétrage permet à l'utilisateur d'ajuster également certains paramètres complémentaires tels que l'intensité ou la durée de ladite fonction massage.

4. Procédé de contrôle selon l'une des revendications 1 à 3, **caractérisé en ce que** ledit menu de paramétrage se ferme automatiquement (étape 400) au bout d'un certain délai prédéterminé pendant lequel ni ladite interface tactile (60) ni ledit bouton physique (50) n'ont respectivement été touché ou pressé par l'utilisateur (t).

5. Procédé de contrôle selon la revendication 4, **caractérisé en ce que** ledit délai prédéterminé (t) est de préférence compris entre 5 et 15 secondes.

6. Procédé de contrôle selon l'une des revendications 1 à 5, **caractérisé en ce que** l'arrêt de ladite fonction massage en cours d'exécution (300) est actionné par l'appui de l'utilisateur sur ledit bouton physique de commande (50) lorsque ledit menu de paramétrage est affiché (a₂).

7. Procédé de contrôle selon la revendication 6, **caractérisé en ce que** le lancement ou l'arrêt de ladite fonction massage (300) peut également être actionné par l'appui de l'utilisateur sur un bouton tactile présent dans ledit menu de paramétrage (b).

8. Système de massage d'un siège de véhicule automobile adapté à la mise en oeuvre d'un procédé selon l'une des revendications 1 à 7, ledit système comportant une pluralité de poches gonflables (20) disposées dans ledit siège, un module de régulation de la pression (30) dans lesdites poches (20), une interface tactile (60) d'affichage et de commande et une unité de pilotage (40) dudit module de régulation (30) couplée à ladite interface tactile (60) ;
**caractérisé en ce qu'**il comporte en outre un unique bouton de commande physique (50) couplé électriquement également à ladite unité de pilotage (40) et destiné au lancement de la fonction massage lorsque le menu de paramétrage (300) est affiché.

9. Système de massage selon la revendication 8, **caractérisé en ce que** ledit bouton physique de commande (50) est situé sur un bord latéral de l'assise dudit siège.

10. Système de massage selon l'une des revendications 7 ou 8, **caractérisé en ce que** ledit bouton physique de commande (50) présente un témoin lumineux (51) allumé lorsque la fonction massage est en cours d'exécution.

## Patentansprüche

1. Verfahren zum Steuern eines Massagesystems eines Kraftfahrzeugsitzes, der eine Massagefunktion integriert und einen einzigen physischen Steuerknopf (50) umfasst, Verfahren **dadurch gekennzeichnet, dass** es die folgenden Schritte umfasst:
- Anzeigen auf einer taktilen Anzeige- und Steueroberfläche (60) des Fahrzeugs eines Parametrierungsmenüs (300) der Massagefunktion, in dem die letzten Parameter, die von dem Benutzer ausgewählt wurden, standardmäßig ausgewählt (100) sind, wobei die Anzeige dieses Parametrierungsmenüs durch das Drücken des Benutzers auf den physischen Steuerknopf (50) (a₁) betätigt wird;
- Starten der Massagefunktion mit den standardmäßig vorausgewählten Parametern oder Parametern, die über das Parametrierungsmenü (300) soeben ausgewählt wurden, wobei dieses Starten der Massagefunktion durch das Drücken des Benutzers auf den physischen Steuerknopf (50), wenn das Parametrierungsmenü angezeigt ist (a₂), betätigt wird.

2. Steuerverfahren nach Anspruch 1, **dadurch gekennzeichnet, dass** es das Parametrierungsmenü dem Benutzer erlaubt, aus mehreren vordefinierten Programmtypen, die jeweils einer oder mehreren bestimmten Massagezonen entsprechen, auszuwählen.

3. Steuerverfahren nach Anspruch 2, **dadurch gekennzeichnet, dass** es das Parametrierungsmenü dem Benutzer erlaubt, auch bestimmte ergänzende Parameter, wie zum Beispiel die Stärke oder die Dauer der Massagefunktion, anzupassen.

4. Steuerverfahren nach einem der Ansprüche 1 bis 3, **dadurch gekennzeichnet, dass** sich das Parametrierungsmenü automatisch nach einer bestimmten vorbestimmten Frist (t), während der weder die taktile Oberfläche (60) noch der physische Knopf (50) jeweils vom Benutzer berührt oder gedrückt wurden, schließt (Schritt 400).

5. Steuerverfahren nach Anspruch 4, **dadurch gekennzeichnet, dass** die vorbestimmte Frist (t) bevorzugt zwischen 5 und 15 Sekunden liegt.

6. Steuerverfahren nach einem der Ansprüche 1 bis 5, **dadurch gekennzeichnet, dass** das Stoppen der Massagefunktion während der Ausführung (300) durch Drücken des Benutzers auf den physischen Steuerknopf (50), wenn das Parametrierungsmenü angezeigt ist (a₂), betätigt wird.

7. Steuerverfahren nach Anspruch 6, **dadurch gekennzeichnet, dass** das Starten oder Stoppen der Massagefunktion (300) auch durch Drücken des Benutzers auf einen taktilen Knopf, der in dem Parametrierungsmenü (b) gegenwärtig ist, betätigt werden kann.

8. Massagesystem eines Kraftfahrzeugsitzes, das an das Umsetzen eines Verfahrens nach einem der Ansprüche 1 bis 7 angepasst ist, wobei das System eine Vielzahl aufblasbarer Beutel (20) umfasst, die in dem Sitz angeordnet sind, ein Druckreglermodul (30) in den Beuteln (20), eine taktile Anzeige- und Steueroberfläche (60) und eine Steuereinheit (40) des Reglermoduls (30), die mit der taktilen Oberfläche (60) gekoppelt ist,
**dadurch gekennzeichnet, dass** es außerdem einen einzigen physischen Steuerknopf (50) umfasst, der elektrisch auch mit der Steuereinheit (40) verbunden und zum Starten der Massagefunktion, wenn das Parametrierungsmenü (300) angezeigt ist, bestimmt ist.

9. Massagesystem nach Anspruch 8, **dadurch gekennzeichnet, dass** der physische Steuerknopf (50) auf einem seitlichen Rand der Sitzfläche des Sitzes liegt.

10. Massagesystem nach einem der Ansprüche 7 oder 8, **dadurch gekennzeichnet, dass** der physische Steuerknopf (50) eine Leuchtanzeige (51) aufweist, die eingeschaltet ist, wenn die Massagefunktion in Ausführung ist.

## Claims

1. A method for controlling a massage system of a motor vehicle seat incorporating a massage function and comprising a single physical control button (50), said method being **characterized in that** it comprises the following steps:
- displaying on a touch-sensitive display and control interface (60) of said vehicle a menu (300) for setting the parameters of said massage function, in which the last parameters to have been chosen by the user are preselected by default (100), this displaying of the parameter-setting menu being actuated by the user pressing said physical control button (50) (a1);
- starting the massage function with the parameters preselected by default or which have just been selected via said parameter-setting menu (300), this starting of the said massage function being actuated by the user pressing said physical control button (50) when said parameter-setting menu is being displayed (a₂).

2. The method for controlling according to Claim 1, **characterized in that** said parameter-setting menu allows the user to choose from a plurality of types of predefined programs and each corresponding to one or several particular massage zones.

3. The method for controlling according to Claim 2, **characterized in that** said parameter-setting menu allows the user to also adjust certain complementary parameters, such as the intensity or the duration of said massage function.

4. The method for controlling according to one of Claims 1 to 3, **characterized in that** said parameter-setting menu closes automatically (step 400) at the end of a certain predetermined time period, during which neither the touch-sensitive interface (60) nor said physical button (50) have respectively been touched or pressed by the user (t).

5. The method for controlling according to Claim 4, **characterized in that** said predetermined time period (t) is preferably comprised between 5 and 15 seconds.

6. The method for controlling according to one of Claims 1 to 5, **characterized in that** the stopping of said massage function during execution (300) is actuated by the user pressing said physical control button (50) when said parameter-setting menu is being displayed (a₂) .

7. The method for controlling according to Claim 6, **characterized in that** the starting or stopping of said massage function (300) can also be actuated by the user pressing a touch-sensitive button present in said parameter-setting menu (b).

8. A massage system of a motor vehicle seat, suited to the implementation of a method according to one of Claims 1 to 7, said system comprising a plurality of inflatable pockets (20) disposed in said seat, a module (30) for regulation of the pressure in said pockets (20), a touch-sensitive display and control interface (60) and a drive unit (40) of said regulation module (30) coupled to said touch-sensitive interface (60);
**characterized in that** it further comprises a single physical control button (50) also coupled electrically to said drive unit (40) and intended for starting the massage function when the parameter-setting menu (300) is being displayed.

9. The massage system according to Claim 8, **characterized in that** said physical control button (50) is situated on a side edge of the seat pan of said seat.

10. The massage system according to one of Claims 7 or 8, **characterized in that** said physical control button (50) has an indicator light (51) which is lit when the massage function is in the course of implementation.
